# EUROPEAN PATENT SPECIFICATION

(11) **EP 3 133 968 B1**
(45) Date of publication and mention of the grant of the patent: **25.09.2019**
(21) Application number: 15719278.2
(22) Date of filing: 24.04.2015
(51) Int. Cl.: A47J 43/24, A01G 7/00, B01D 35/28, B65D 25/24, B65D 25/28, B65D 43/02

(54) **DRAINAGE BOWL WITH RESILIENT BI-STABLE DIAPHRAGM MEMBER**
ABFLUSSSCHALE MIT NACHGIEBIGEM BI-STABILEM MEMBRANELEMENT
CUVE DE DRAINAGE AYANT UN ÉLÉMENT DE DIAPHRAGME BI-STABLE ÉLASTIQUE

(30) Priority: 25.04.2014 GB 201407311
(43) Date of publication of application: 01.03.2017
(73) Proprietor: Bang Products Limited, Haslemere, Surrey GU27 2LA (GB)
(72) Inventor: PRIESTNER, Arthur Jacques, Solihull West Midlands B92 7AD (GB); KNOX, Stefan, Billingshurst Sussex RH14 0JN (GB)
(74) Representative: Bridge-Butler, Jeremy
(86) International application number: PCT/GB2015/051208
(87) International publication number: WO 2015/162434

(56) References cited:
- GB-A- 2 496 061
- JP-A- 2011 172 618
- JP-U- S61 170 441
- US-A1- 2008 008 802
- US-A1- 2013 313 263

## Description

The present invention relates to a drainage bowl with a resilient bi-stable diaphragm member, for use particularly, but not exclusively, as a closable colander.

Colanders are widely used in the preparation of food which is cooked in a cooking liquid, such as boiling water. Once cooked the food and water are poured into a colander and the cooking liquid is allowed to drain therefrom, leaving the food to be further prepared or served.

One drawback with traditional colanders is that the food must be transferred therefrom to another container for further preparation or for serving, because food or further cooking liquid can continue to drain from the drainage apertures for some time. This adds to the food preparation time, and is inconvenient.

Another problem with known colanders is that they are often placed in a sink for use, which can locate them at an awkwardly height. To solve this problem some colanders are provided with a foot to raise them off any surface, however this makes such colanders harder to store because they are larger in size.

JP 2011172618 addresses the storage space problem with a colander having a dome shaped foot which is eversible into a dome shaped saucer configuration. The inner surface of the dome shaped saucer is larger than and concentric with the outer surface of the colander so that liquid can also drain from the colander when the foot has been inverted into the saucer configu ration.

A different kind of drainage problem is encountered with some plants which thrive on regular transient watering. Known plant pots for these kinds of plants comprise apertures which allow water to drain therefrom after it has been poured into the soil and has passed over the roots of the plant. However, these kinds of pots are only appropriate for an outdoor setting as they obviously leak. If a water tight pot is used with such a plant housed indoors, the plant can suffer because it is subjected to too much water for too long.

The present invention is intended to overcome some of the above described problems.

Therefore, according to the present invention, a bowl comprises an open top, an outer surface and a base, in which a plurality of first drainage apertures are provided in said outer surface, in which said base is provided with a resilient bi-stable diaphragm member which is manually switchable between a first dome configuration in which it extends away from said outer surface, and a second dome configuration in which it is everted in relation to said first configuration and overlies said outer surface to close said plurality of first drainage apertures.

Thus, the present invention provides a colander or plant pot with drainage apertures which can be opened and closed in a quick and easy manner by flipping the resilient diaphragm member between its two configurations.

The use of a resilient bi-stable evertable member has a number of advantages. Firstly, as the diaphragm member is stable in its two different dome configurations it will remain static in those configurations until sufficient external influence is applied. Secondly, once sufficient force has been applied to flex the diaphragm member past the point at which it will return to one dome configuration, it will automatically move quickly into its opposite dome configuration. This is advantageous because the drainage apertures can be closed quickly and with a degree of resilient spring force.

It is possible for the outer surface of the bowl to define an area which is equal to, or lesser in volume than a volume defined by the diaphragm member when in its second dome configuration. This would mean that the diaphragm member is a snug, or loose fit over the outer surface. However, in a preferred construction the outer surface can instead define an area which is greater in volume than a volume defined by the diaphragm member when in its natural second dome configuration. (The term "natural second dome configuration" is intended to refer to the stable shape the diaphragm member would assume if not mounted to the bowl. Of course, when it is attached to the bowl it never achieves this shape, as it is prevented from doing so by the outer surface.) This arrangement means that a degree of resilient force will be exerted by the diaphragm member against the outer surface, thereby closing the drainage apertures effectively.

When the diaphragm member is in its first dome configuration it can form a useful foot upon which the colander or plant pot can sit. In particular, with a colander it can be placed in a sink and the diaphragm member will hold it above the base of the sink. When liquid drains from the colander in use it will pass through the drainage apertures and out onto the surface of the diaphragm member, which will direct it down and away to the base of the sink.

It will be appreciated that the diaphragm member could be switched between its two configurations by means of direct manual manipulation, however preferably the bowl can comprise an outer rim which defines the open top, and a pair of diametrically opposed handles can be formed on said outer rim, which can be used to apply downward pressure in use to flip the diaphragm member from its first dome configuration to its second. Therefore, once a colander has drained in a sink the user need only apply downward pressure to the handles to evert the diaphragm member and close the drainage holes. The bowl can then be transferred to another surface for the food to be further prepared, or served.

It will also be appreciated that a diaphragm member which can evert in this manner can have any general shape, and in one version of the invention the diaphragm member can be annular.

However, a particular problem may arise with an annular diaphragm member if the bowl is used as a colander. In particular, if the diaphragm member is placed on a planar surface, and hot cooking liquid then drains onto the diaphragm member in use, this can cause it to expand and create suction onto the planar surface. To avoid this the diaphragm member can comprise an outer rim with at least one concavity formed therein, such that when the diaphragm member is in the first dome configuration a first portion of the outer rim extends through a first plane, and a second portion of said outer rim extends through a second plane different to the first plane. Therefore, if the diaphragm member is placed on a planar surface at least one gap is provided around the outer rim, which prevents the creation of any negative pressure thereunder in use. Preferably a plurality of spaced gaps like this are provided.

Liquid can drain from any aperture in a colander or similar device, but it will tend to drain from the bottom thereof. Therefore, in one embodiment of the invention the outer surface can comprises a plurality of second drainage apertures positioned further from the base that the plurality of first drainage apertures , and in the second dome configuration an outer rim of said diaphragm member can be disposed between the first drainage apertures and the second drainage apertures, so the second drainage apertures remain open.

The bowl of the present invention can be manufactured from any suitable materials, and using any suitable techniques. The only requirement is that the diaphragm member be physically capable of operating in the manner described above. It has been found that silicone is a suitable material from which to construct the diaphragm member, but it could also be made from any plastics materials such as polyurethane, or from any rubber material. If the bowl is to be used in the preparation and serving of food, then any silicone material used would have to be food-grade. This would not be necessary if the bowl was only for use as a plant pot. The main body of the bowl can be made from any known plastics or metal material.

The diaphragm member can be affixed to the base of the bowl using any suitable means, but in one version of the invention the base can comprise a mounting aperture, and the diaphragm member can comprise a plug section which is a push-fit into said mounting aperture. Alternatively, the outer surface can comprise a mounting aperture at the base, the diaphragm member can comprise a central opening which is aligned with the mounting aperture, and the bowl can comprise a clamp member which passes through the central opening and can be affixed in the mounting aperture. The clamp member can comprise a flange section which retains the diaphragm member. The clamp member can be affixed in the mounting aperture in any known way, such as with bolts or rivets, by means of a resistance fit, or by means of a screw thread.

In one version of the invention the diaphragm member can comprise an internal spring steel member comprising a central portion aligned with a centre of the diaphragm member, and plurality of spring arms extending radially away from said central portion. This construction provides the diaphragm member with a more robust everting characteristic, as the spring steel assists the movement.

In another version of the invention the diaphragm member can comprise a substantially annular hinge formed therein comprising a section of silicone material
narrower than the remainder of the diaphragm member. The use of such a hinge helps the diaphragm member to move between its two dome configurations, and it also provides a degree of stability to the first dome configuration, when the diaphragm member may be used to support the bowl above it.

In addition, it has been found that in some situations the diaphragm member may flip into its second dome configuration with sufficient force to eject liquid in the vicinity of any of the first drainage apertures upwards. If the bowl is used as a colander this could mean that hot cooking liquid is ejected towards the user pushing down on it.

Therefore, in another version of the invention the diaphragm member can comprise a polar axis and a radial axis which intersects said outer rim at first and second opposite circumferential points. At a cross-section passing through the diaphragm member which is aligned with the radial axis the diaphragm member can comprise a first part on one side of the polar axis which has a greater thickness than a second part on the opposite side of the polar axis. Further, the thickness of the diaphragm member can decrease linearly in a circumferential direction from the first part to the second part, in both circumferential directions therefrom.

With this arrangement the force required to flex the diaphragm member at the first part past the point it will then evert automatically is greater than the force required to flex the diaphragm member at the second part past the same point, as it is thinner and therefore more flexible. The force required decreases linearly around the outer rim from the first part to the second. This means that if a user exerts equal downward pressure on the handles in use the diaphragm member will evert first at the second part, and it will then continue to do so around the opposite sides of the diaphragm member round to the first part. It essentially rolls circumferentially from one side to the other rather than flipping up in one upward movement. This rolling motion helps to prevent the diaphragm member from ejecting any cooking liquid in the vicinity of the draining apertures in an upward direction.

Another way to address the issue of liquid being ejected upwards when the diaphragm member is everted from the first dome configuration to the second, is to improve the drainage of liquid from the surface of the diaphragm member itself. The less liquid present on the diaphragm member the less likely that any will be ejected upwards. Improving the drainage also improves the general efficiency of the colander.

Therefore, in one embodiment the diaphragm member can comprise a plurality of radially extending rib cavities formed in a first surface thereof, said first surface being that which forms an exterior of said diaphragm member when it is in said first dome configuration. With this feature, when the liquid leaves the colander and lands on the diaphragm member it collects in the rib cavities on the exterior thereof, from where it is effectively drained away.

In an alternative embodiment the diaphragm member can comprise a polar axis and an outer rim, and a thickness of said diaphragm member can increase in a radial direction from said polar axis to said outer rim. With this arrangement, when the diaphragm member is in the first dome configuration a portion adjacent to the outer rim inclines inwardly, to give the bottom of the diaphragm member a slightly more rounded shape. It does this because the extra material adjacent to the outer rim renders it slightly less resilient, and slightly less inclined to evert. As such, the liquid drains away from the bottom of the diaphragm member more effectively because of its rounded shape.

Furthermore, it has also been found that in some situations the diaphragm member is resistant to the everting action generally. Therefore, in another embodiment of the present invention the diaphragm member can comprise a polar axis, and an annular cavity which is axially aligned with said polar axis. This annular cavity divides the diaphragm member into two sections with a ring of greater flexibility between them, and as a result when pressure is applied to the diaphragm member in use these two sections collapse in relation to one another as the diaphragm member everts from one dome configuration to the other. This makes the diaphragm member easier to manually manipulate, and it also serves to prevent it from ejecting liquid upwards in the manner described above, as the movement from the first dome configuration to the second is less sudden.

Preferably the diaphragm member can comprise a plurality of these annular cavities. They can be aligned with the polar axis, and a first set of cavities of different circumferences can be provided in a first surface of the diaphragm member, and a second set which correspond in position and size to the first set can be provided in a second surface of said diaphragm member. These annular cavities divide the diaphragm member into a plurality of toroidal sections with rings of greater flexibility between them, and as a result when pressure is applied to the diaphragm member in use these toroidal sections collapse in relation to one another as the diaphragm member everts from one dome configuration to the other. This makes the diaphragm member even easier to manually manipulate, and it again serves to prevent it from ejecting liquid upwards in the manner described above, as the movement from the first dome configuration to the second is even less sudden.

In any of the versions of the invention described above, a lid can be provided to close the open top of the bowl. This can be in order to seal an interior of the bowl when the diaphragm member is in its second dome configuration, so any contents can be preserved for a longer period of time, for example a number of hours or days, and/or it can also be to simply overlie the open top of the bowl in a non-sealed manner to best preserve the any contents for a shorter period of time, for example between preparation of food and then serving it.

So, preferably the bowl can further comprise a lid adapted to close the open top, which can comprise a first side, a second side, a peripheral rim and a resilient flange member which can extend from the peripheral rim. In a first closed position of the lid, it can be disposed in the open top with the first side uppermost and with the resilient flange member placed under compression against an interior surface portion of the bowl, thereby forming a seal. In order to place the lid in its first closed position it would simply be necessary to apply a light manual downward pressure in order to place the resilient flange member under the required compression to form the seal.

In a preferred embodiment, the resilient flange member can be formed such that when it is under no compression it extends from the peripheral rim at an angle which is less than 180 degrees to a plane of the first side. The resilient flange member can then comprise at least one aperture formed therein, which can extend from an outer edge thereof to a point spaced from the peripheral rim. In a second closed position of the lid, it can be disposed in the open top with the second side uppermost, and with the outer edge of the resilient flange member resting against the interior surface portion of the bowl, and with the at least one aperture forming an opening into an interior of the bowl.

This arrangement provides a versatile lid which can either seal the open top of the bowl by being placed therein with the resilient flange member biased against the interior surface portion, or which can be turned the other way up to loosely close the open top of the bowl. The at least one aperture, of which there are preferably two, provides a means by which an implement such a serving spoon can be placed inside the bowl with its handle extending through the opening formed by the aperture while the lid is in its second position. The provision of the at least one aperture does not affect the ability of the resilient flange member to seal the open top when the lid is in the first closed position, because the aperture does not extend the full width of the resilient flange member.

The lid can be constructed from a resilient silicone material, and it can have a handle on both the first side and the second side to allow for its ready manual manipulation.

The invention can be performed in various ways, but nine embodiments will now be described by way of example and with reference to the accompanying drawings, in which:
Figure 1 is a side view of a first bowl according to the invention in which a diaphragm member part thereof is arranged in a first dome configuration;
Figure 2 is a side view of the bowl shown in Figure 1, in which the diaphragm member part thereof is arranged in a second dome configuration;
Figure 3 is a bottom view of the bowl shown in Figure 1, in which the diaphragm member part thereof is arranged in the second dome configuration;
Figure 4 is a perspective view of the bowl shown in Figure 1, in which the diaphragm member part thereof is arranged in the first dome configuration;
Figure 5 is an exploded side view of the bowl shown in Figure 1, in which the diaphragm member part thereof is shown in cross-section;
Figure 6 is an exploded side view of a second bowl according to the present invention;
Figure 7 is a partial cross-sectional side view of the bowl shown in Figure 6, in which a diaphragm member part thereof is arranged in a second dome configuration;
Figure 8 is a diagrammatic perspective view of a diaphragm member part of a third bowl according to the present invention;
Figure 9 is an in-use side view of the bowl shown in Figure 1, in which the diaphragm member part thereof is arranged in the first dome configuration;
Figure 10 is an in-use side view of the bowl shown in Figure 1, in which the diaphragm member part thereof is arranged in the second dome configuration;
Figure 11 is a cross-sectional side view of a diaphragm member part of a fourth bowl according to the present invention;
Figure 12 is a top view of the diaphragm member part shown in Figure 11.
Figure 13 is a perspective view of a diaphragm member part of a fifth bowl according to the present invention;
Figure 14 is a cross-sectional side view of a diaphragm member part of a sixth bowl according to the present invention;
Figure 15 is a side view of the sixth bowl according to the present invention;
Figure 16 is a cross-sectional side view of a diaphragm member part of a seventh bowl according to the present invention;
Figure 17 is a perspective view of a diaphragm member part of the seventh bowl according to the present invention;
Figure 18 is a perspective view of an eighth bowl according to the present invention;
Figure 19 is a cross-sectional side view of a ninth bowl according to the present invention in which a lid part thereof is arranged in a first closed position;
Figure 20 is a perspective view of the bowl as shown in Figure 19;
Figure 21 is a cross-sectional side view of the bowl shown in Figure 19 in which said lid part thereof is arranged in a second closed position; and
Figure 22 is a perspective view of the bowl as shown in Figure 21.

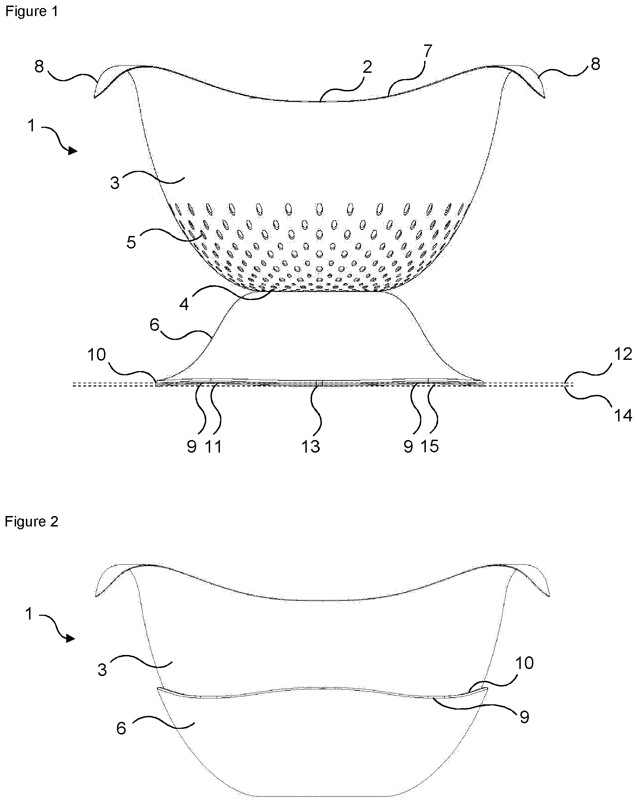

As shown in Figures 1 and 2, a bowl, in the form of colander 1, comprises an open top 2, an outer surface 3 and a base 4, in which a plurality of first drainage apertures 5 are provided in said outer surface 3, in which said base 4 is provided with a resilient bi-stable diaphragm member 6 which is manually switchable between a first dome configuration, as shown in Figure 1, in which it extends away from said outer surface 3, and a second dome configuration, as shown in Figure 2, in which it is everted in relation to said first configuration and overlies said outer surface 3 to close said plurality of first drainage apertures 5.

In this embodiment the colander 1 is constructed from a metal material, and the diaphragm member 6 is constructed from a resilient food-grade silicone material. The colander 1 comprises an outer rim 7, which defines the open top 2. A pair of diametrically opposed handles 8 are formed on the outer rim 7, which can be used to apply downward pressure in use to flip the diaphragm member 6 from its first dome configuration as shown in Figure 1, to its second dome configuration as shown in Figure 2.

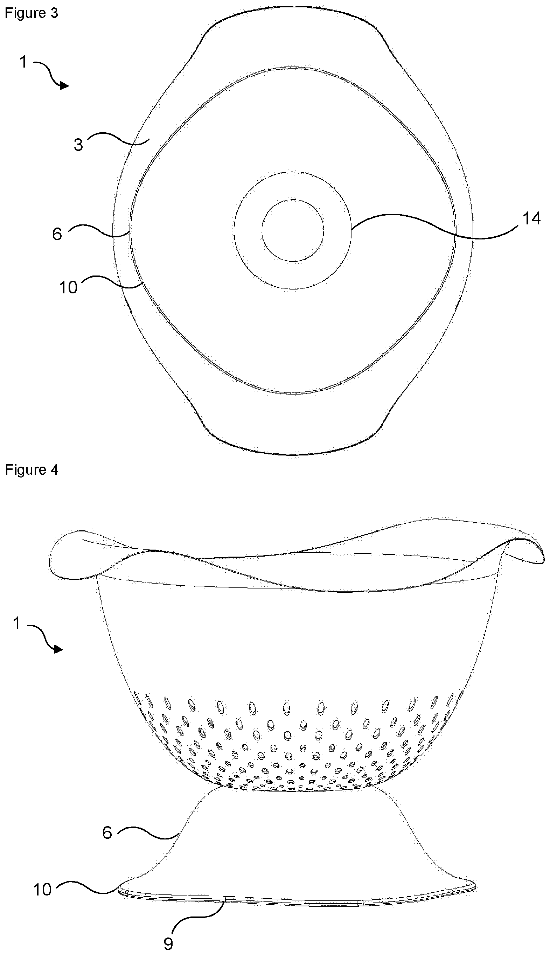

As is clear from Figures 1 to 5, the diaphragm member 6 has a generally annular shape, but it has four equally spaced concavities 9 formed in an outer rim 10 thereof. As such, said outer rim 10 has a slightly undulating shape when the diaphragm member 6 is arranged in the second configuration, as shown in Figure 2. In addition, when the diaphragm member 6 is in the first dome configuration, as shown in Figures 1 and 4, first portions 11 of the outer rim 10 extend through a first plane 12, and second portions 13 of said outer rim 10 extend through a second plane 14 different to the first plane 12. Therefore, if the diaphragm member 6 is placed on a planar surface gaps 15 are provided around the outer rim 10, which prevents the creation of any negative pressure thereunder in use. This could otherwise occur if the diaphragm member 6 were placed on a planar surface, and hot cooking liquid then drained onto the diaphragm member 6 in use, which caused it to expand and create suction onto the planar surface.

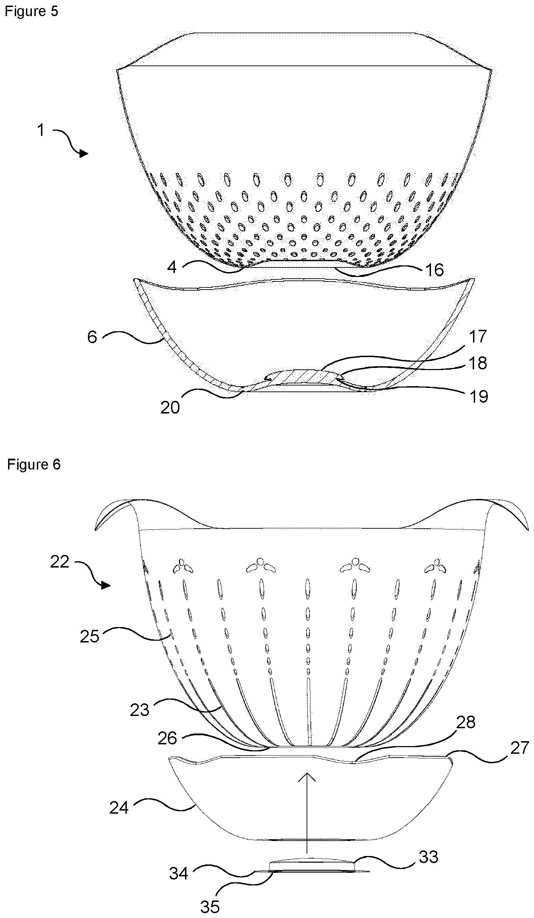

Referring to Figure 5, the base 4 comprises a mounting aperture 16, and the diaphragm member 6 comprises a plug section 17 which is a push fit into the mounting aperture 16. The plug section 17 has a mushroom-shaped cross section defining a head part 18 and a neck part 19. The head part 18 has a greater diameter than the mounting aperture 16, so when it is forced therethrough it serves to retain the diaphragm member 6 in place.

As is also shown in Figure 5, the diaphragm member 6 comprises a substantially annular hinge 20 formed therein, comprising a section of silicone material narrower than the remainder of the diaphragm member 6. The use of such a hinge helps the diaphragm member 6 to move between its two dome configurations, and it also provides a degree of stability to the first dome configuration, when the diaphragm member 6 may be used to support the colander 1 above it.

The outer surface 3 in this embodiment defines an area which is greater in volume than a volume defined by the diaphragm member 6 when in its natural second dome configuration, were it not mounted to the bowl. Of course, when it is attached to the bowl as shown in the Figures, it never achieves this shape as it is prevented from fully doing so by the outer surface 3. However, this arrangement means that a degree of resilient force is exerted by the diaphragm member 6 against the outer surface 3, thereby to close the drainage apertures 5 effectively.

Therefore in use a user arranges the diaphragm member 6 into the first dome configuration as shown in Figures 1 and 4, and places the colander 1 in a sink, or on a drainer or the like. In this position the diaphragm member 6 forms a useful foot upon which the colander 1 sits, thereby raising it to a useful height for the user to readily access. As a result of the concavities 9 formed in the outer rim 10 of the diaphragm member 6, no seal can be created between it and a planar surface upon which it rests, which could otherwise facilitate suction. As the diaphragm member 6 is bi-stable it remains static in this first dome configuration, even if a degree of force is applied. However, as the diaphragm member 6 is resilient, if some force is applied it will flex. As such any small inadvertent impacts will be absorbed. In addition, should a user wish to tilt the colander 1 in a particular direction, for example if a heavy load is applied to one side, the diaphragm member 6 will provide for this.

The user then places their cooked food into the colander 1 and allows the cooking liquid to drain through the drainage apertures 5. The liquid passes through the drainage apertures 5 and down the diaphragm member 6, into the sink or onto the drainer.

When the draining is complete the user exerts downward pressure on the two handles 8. This needs to be done with sufficient force to flex the diaphragm member 6 past the point at which it would return to its first dome configuration, so it will then move quickly into its opposite second dome configuration, as shown in Figures 2 and 3, in which it closes the drainage apertures 5. This is advantageous because the drainage apertures 5 are closed quickly and with a degree of resilient spring force.

As the outer surface 3 defines an area which is greater in volume than a volume defined by the diaphragm member 6 when in its natural second dome configuration, a degree of resilient force is also exerted by the diaphragm member 6 against the outer surface 3, thereby closing the drainage apertures 5 effectively.

The colander 1 can then be transferred to another surface for the drained food to be further prepared, or served.

After use the diaphragm member 6 can be manually manipulated to return the colander 1 to the arrangement shown in Figure 1, for cleaning or for further use. Obviously the colander 1 is more readily stored with the diaphragm member 6 in its second dome configuration, as shown in Figures 2 and 3.

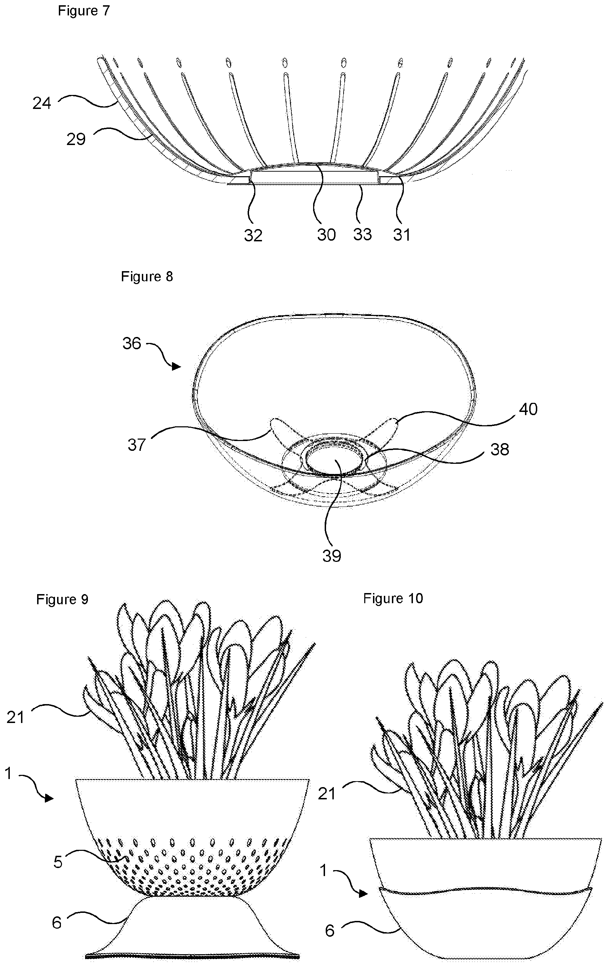

It will be appreciated that the device shown in Figures 1-5 does not only find application as a colander as described above. It can also be used to facilitate any draining process. For example, as shown in Figures 9 and 10, it can also be used to store and to water plants 21 of the kind which thrive on regular transient watering. With this use the diaphragm member 6 can be placed in its second dome configuration, in the manner described above, so it forms a liquid tight plant pot as shown in Figure 10. Soil can be placed therein, and the plants 21 planted. When the plants 21 require watering the diaphragm member 6 can be manually manipulated into its first dome configuration, as shown in Figure 9, and the plants 21 can be watered. The water can pass over the roots of the plant and then drain from the drainage apertures 5. When the watering process has completed the user can switch the diaphragm member 6 back to its first dome configuration in the manner described above, so no further water or soil will leak out.

The embodiment shown in Figures 1-5 and 9-10 can be altered without departing from the scope of claim 1. For example, Figures 6 and 7 show a second colander 22 which operates in the same manner as colander 1 described above, but it has a few different features.

In particular, colander 22 comprises not only first drainage apertures 23, which are closed by diaphragm member 24 in the manner described above, but also a plurality of second drainage apertures 25, which are positioned further from the base 26 than the first drainage apertures 23. As a result of this, when the diaphragm member 24 is arranged in the second dome configuration the outer rim 27 thereof is disposed between the first drainage apertures 23 and the second drainage apertures 25, so the second drainage apertures 25 remain open. It will also be appreciated that the first and second drainage apertures 23 and 25 are of a different shape and configuration to drainage apertures 5 in colander 1.

This configuration of drainage apertures 23 and 25 allows for increased aeration of any food in the colander 22 once the diaphragm member 24 has been placed in the second dome configuration. It also provides an improved aesthetic appearance.

Diaphragm member 24 is also generally annular, like diaphragm member 6 described above, but it also comprises four equally spaced concavities 28, which are a different shape to those referred to above, but which perform the same function.

The manner in which the diaphragm member 24 is affixed to the colander 22 is also different to the arrangement of the first embodiment. In particular, referring to Figure 7, the outer surface 29 of the colander 22 comprises a mounting indentation 30 at the base 31, the diaphragm member 24 comprises a central opening 32 which is aligned with the mounting indentation 30, and the colander 22 comprises a clamp member 33 which passes through the central opening 32 and is affixed in the mounting indentation 30. As is clear from Figure 6, the clamp member 33 is a metal cap provided with a flange section 34 at an outer end 35 thereof which retains the diaphragm member 18. The clamp member 33 is affixed in the mounting indentation in any known way. This could be with the use of bolts or rivets, by means of a resistance fit, or by means of a screw thread, none of which are shown. In each case the clamp member 33 can be removed in order to dismantle the colander 22 for cleaning (except if it is secured with rivets or the like which cannot be released).

In an alternative construction (not shown) the diaphragm member can comprise a central clamp member part which is integrally moulded with it. For example, if the diaphragm member is constructed from silicone, then a central section can be made from a plastics material, or a metal, and can be integrated into the part with using a dual-shot manufacturing process. The central clamp member part can be like clamp member 33 described above, and can affix to the colander 22 using any known means, such as a resistance fit, a screw thread, or bolts or rivets.

Figure 8 shows a diaphragm member 36 used in another embodiment of the invention. The diaphragm member 36 is for use with a colander like colander 1 described above, but it comprises an internal spring steel member 37 (shown in hashed lines) comprising a central portion 38 aligned with a centre 39 of the diaphragm member 36 and four equally spaced spring arms 40 extending radially away from said central portion 39. This construction provides the diaphragm member 36 with a more robust everting characteristic, as the spring steel assists the movement between the first and second dome configurations.

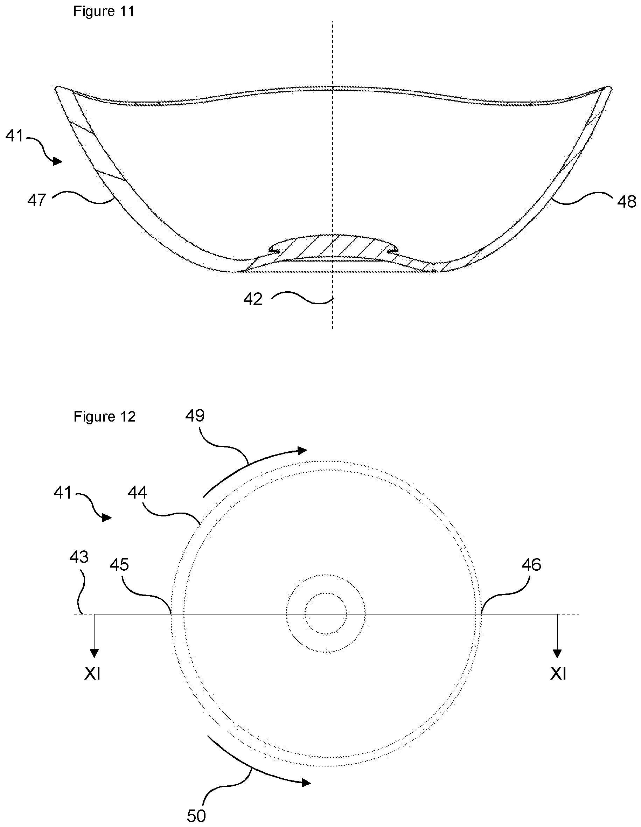

Figures 11 and 12 show a diaphragm member 41 used in another embodiment of the invention. The diaphragm member 41 is similar to diaphragm member 6 described above, but it has an additional feature. In particular, the diaphragm member 41 comprises a polar axis 42 and a radial axis 43 which intersects the outer rim 44 at first and second opposite circumferential points 45 and 46. At the cross-section passing through the diaphragm member 41 which is aligned with the radial axis 43, which is the cross-section shown in Figure 11, the diaphragm member 41 comprises a first part 47 on one side of the polar axis 42 which has a greater thickness than a second part 48 on the opposite side of the polar axis 42. As is clear from Figure 12, the thickness of the diaphragm member 47 decreases linearly in a circumferential direction from said first part 47 (aligned with point 45) to said second part 48 (aligned with point 46), in both circumferential directions, indicated by arrows 49 and 50, therefrom.

With this arrangement the force required to flex the diaphragm member 41 at the first part 47past the point it will then evert is greater than the force required to flex the diaphragm member 41 at the second part 48, as it is thinner and therefore more flexible. The force required decreases linearly around the outer rim 44 from the first part 47 to the second 48, which means that if a user exerts equal downward pressure on the handles in use the diaphragm member 41 will evert first at the second part 48, and it will then continue to do so around the opposite sides of the diaphragm member 41 round to the first part 45. It essentially rolls circumferentially from one side to the other rather than flipping up in one upward movement. This rolling motion helps to prevent the diaphragm member 41 from ejecting any cooking liquid in the vicinity of the draining apertures in an upward direction in use.

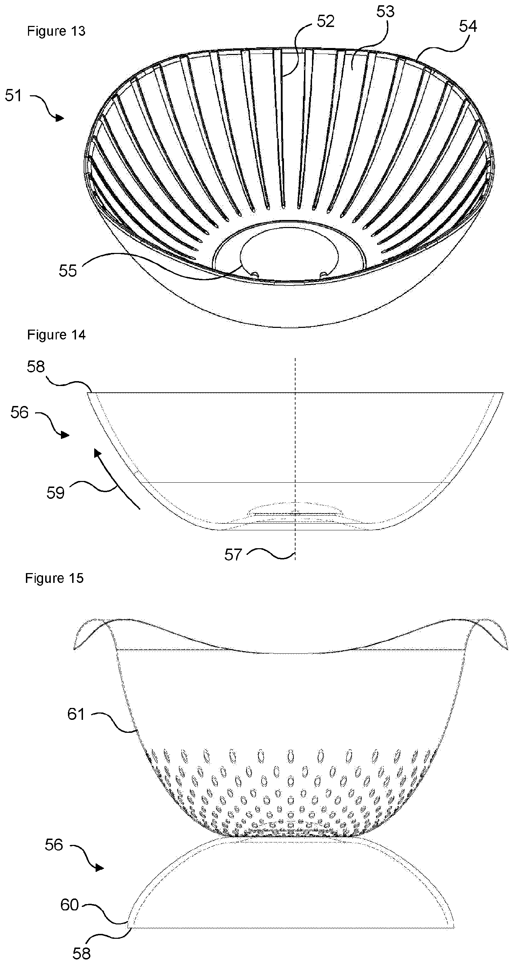

Figure 13 shows a diaphragm member 51 used in another embodiment of the invention. The diaphragm member 51 is similar to diaphragm member 6 described above, but it has an additional feature. In particular, the diaphragm member 51 comprises a plurality of rib cavities 52 on a first surface 53 thereof. The first surface 53 being the surface which is inside the diaphragm member 51 when it is in the second dome configuration, as shown in Figure 13, but which forms the exterior of the diaphragm member 51 when it is in the first dome configuration. The rib cavities extend from an outer rim 54 of the diaphragm member 51 most of the way to the plug section 55.

The purpose of the rib cavities 52 is to facilitate the drainage of cooking liquid from the colander when the diaphragm member 51 is in the first dome configuration. The liquid leaves the colander and collects in the rib cavities 52, from where it is effectively drained away. This improves the functionality of the colander because it drains more efficiently, and it also serves to prevent the occurrence of cooking liquid being ejected upwards when the diaphragm member 51 is everted from the first dome configuration to the second dome configuration in use, because less liquid remains on the diaphragm member 51.

Figures 14 and 15 show a diaphragm member 56 used in another embodiment of the invention. The diaphragm member 56 is similar to diaphragm member 6 described above, but it has an additional feature. In particular, the diaphragm member 56 comprises a polar axis 57 and an outer rim 58, and a thickness of the diaphragm member 56 increases in a radial direction from said polar axis 57 to said outer rim 58, as indicated by arrow 59. The increase in thickness towards the outer rim 58 is only small, but it has a material effect on the working of the diaphragm member 56.

In particular, when the diaphragm member 56 is in the first dome configuration as shown in Figure 15, a portion 60 adjacent to the outer rim 58 inclines inwardly, to give the bottom of the diaphragm member 56 a slightly more rounded shape. It does this because the extra material adjacent to the outer rim 58 renders it slightly less resilient, and slightly less inclined to evert.

The purpose of this diaphragm member shape is to facilitate the drainage of cooking liquid from the colander 61 when the diaphragm member 56 is in the first dome configuration. The liquid drains away from the bottom of the diaphragm member 56 more effectively because of its rounded shape. This improves the functionality of the colander 61 because it drains more efficiently, and it also serves to prevent the occurrence of cooking liquid being ejected upwards
when the diaphragm member 56 is everted from the first dome configuration to the second dome configuration in use, because less liquid remains on the diaphragm member 56.

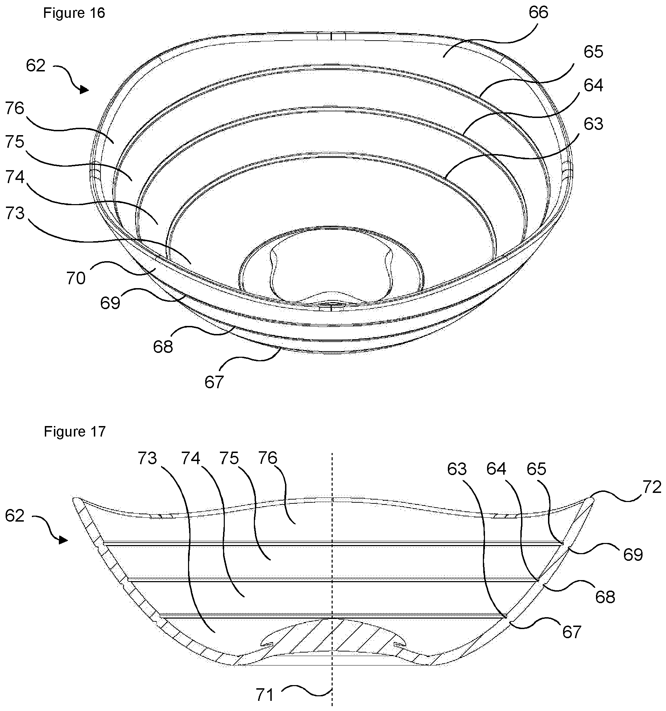

Figures 16 and 17 show a diaphragm member 62 used in another embodiment of the invention. The diaphragm member 62 is similar to diaphragm member 6 described above, but it has an additional feature. In particular, it is provided with a first set of annular cavities 63-65 in a first surface 66 thereof, and a second set of correspondingly positioned and sized annular cavities 67-69 in a second surface 70 thereof. These annular cavities 63-69 are all axially aligned with a polar axis 71 of the diaphragm member 62, and as is clear from Figures 16 and 17, the three opposed pairs 63 and 67, 64 and 68 and 65 and 69 are equally spaced between the polar axis 71 and an outer rim 72 of the diaphragm member 62. The annular cavities 63-69 are formed by creating wasted sections in the diaphragm member 62.

These annular cavities 63-69 divide the diaphragm member 62 into a central section 73, and three toroidal sections 74-76 with rings of greater flexibility between them. As a result when pressure is applied to the diaphragm member 62 in use the toroidal sections 74-76 collapse in relation to one another as the diaphragm member 62 everts from one dome configuration to the other. This makes the diaphragm member 62 easier to manually manipulate, and it also serves to prevent it from ejecting liquid upwards in the manner described above, as the movement from the first dome configuration to the second is less sudden.

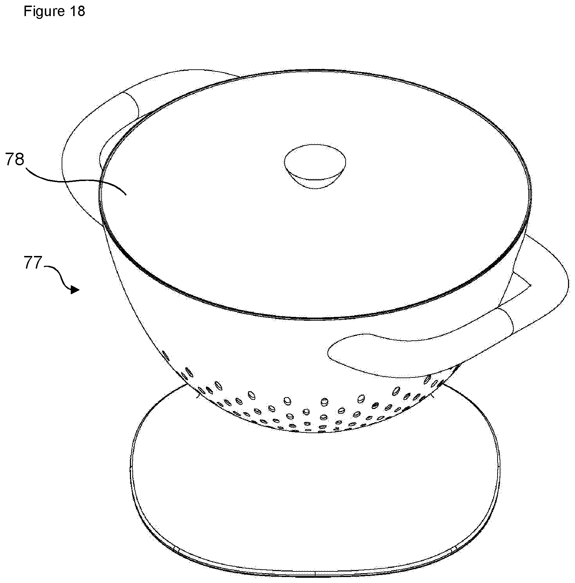

Figure 18 shows an embodiment of the invention, in which colander 77 is the same as colander 1 described above, except that it is provided with a removable lid 78. The lid 78 add greater versatility to the colander 77, as prepared food can be drained, and then kept in a sealed container before being consumed. This helps to preserve the texture and heat of some foodstuffs prior to serving.

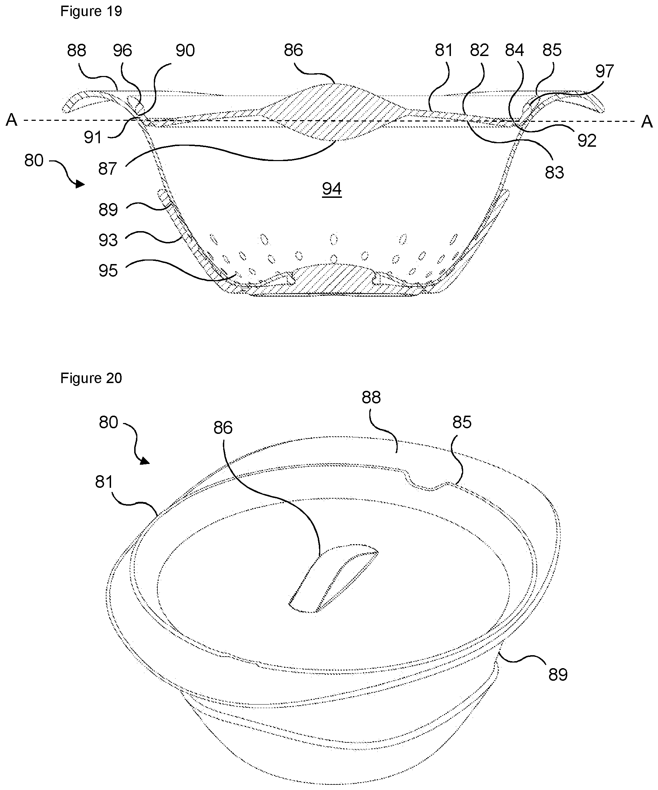

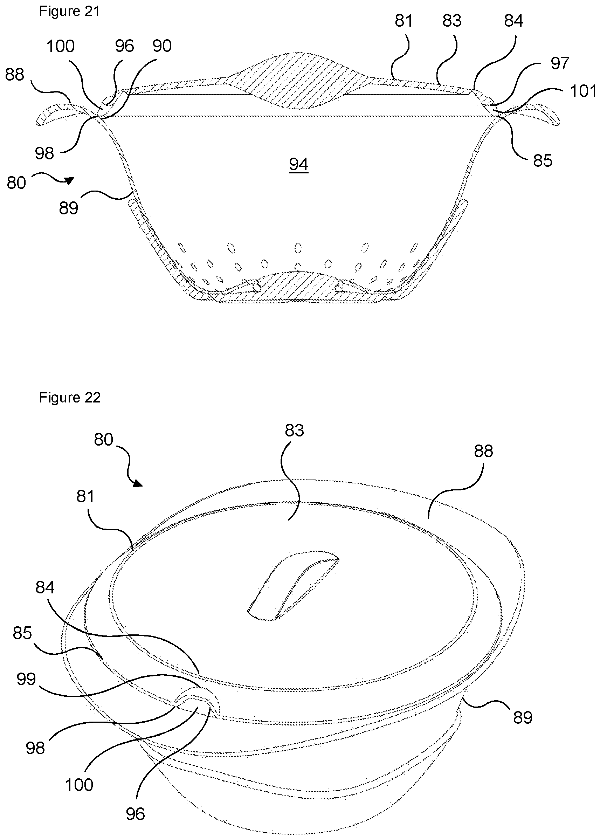

Figures 19 to 22 show a further embodiment of the invention, in which colander 80 is similar to colander 1 described above, except that it is provided with resilient silicone lid 81. The lid 81 comprises a first side 82, a second side 83, an annular peripheral rim 84 and an annular resilient flange member 85 which extends from the peripheral rim 84. As is clear from Figures 19 to 22, the resilient flange member 85 is formed such that it extends from the peripheral rim 84 at an angle which is less than 180 degrees to a plane A-A of the first side 82. The angle of the resilient flange member 85 is approximately 50 degrees to the plane A-A when the resilient flange member 85 is under no compression (as in Figures 21 and 22). The lid 81 also comprises handles 86 and 87 provided on the first and second sides 82 and 83 respectively, to allow for its ready manual manipulation.

As shown in Figure 19, the lid 81 can be placed in a first closed position, in which it is disposed in the open top 88 of the bowl 89, with the first side 82 uppermost and with the resilient flange member 85 placed under compression against an interior surface portion 90 of the bowl 89, thereby forming a seal. An exterior side 91 of the resilient flange member 85 creates the seal by forming a contact area with the interior surface portion 90. In order to place the lid 81 in its first closed position it is only necessary to apply a light manual downward pressure in order to place the resilient flange member 85 under the required compression to form the seal. This pressure can be applied via the handle 86. An annular wasted section 92 is provided on the lid 81 adjacent to the resilient flange 85, in order to facilitate the rotation of the resilient flange member 85 into the position shown in Figure 19.

If the lid 81 is placed in this first position when the diaphragm member 93 is in its second dome configuration, as shown in Figures 19 and 20, the interior 94 of the bowl 89 is completely sealed. This arrangement could be performed in order to preserve the contents of the bowl 89 for a longer period of time, for example a number of hours or days. As such, the sealing function of the lid 81 only has a purpose when used with a colander like colander 80 with drainage apertures 95 which can be sealed closed.

Referring to Figures 21 and 22, it can be seen that the resilient flange member 85 comprises two apertures 96 and 97 formed at opposite ends thereof. The apertures 96 and 97 each extend from an outer edge 98 of the resilient flange member 85 to a point 99 spaced from the peripheral rim 84. The lid 81 can be placed in a second closed position as shown in Figures 21 and 22, in which it is disposed in the open top 88 of the bowl 89 with the second side 83 uppermost, and with the outer edge 98 of the resilient flange member 85 resting against the interior surface portion 90 of the bowl 89. As shown in Figures 21 and 22, in this position the two apertures 96 and 97 form two openings, 100 and 101 respectively, into the interior 94 of the bowl 89. The openings 100 and 101 provide a means by which implements such a serving spoons (not shown) can be placed inside the bowl 89 with their handles extending through the openings 100 or 101 while the lid 81 is in its second position. With the lid 81 in the second position it only loosely overlies the open top 88 of the bowl 89 in a non-sealed manner, which best preserves any contents of the bowl 89 for a shorter period of time, for example between preparation of food and its serving.

It will be appreciated that the apertures 96 and 97 do not affect the ability of the resilient flange member 85 to seal the open top 88 when the lid 81 is in the first closed position, because the apertures 96 and 97 do not extend the full width of the resilient flange member 85. This is clear from Figure 1 which demonstrates the seal being formed despite the presence of the apertures 96 and 97.

It will also be appreciated that a lid like lid 81 could be provided with any of the eight other embodiments of the invention described above, which would work to provide the same advantages.

In further embodiments of the invention (not shown) the bowl defines an area which is equal to, or lesser in volume than a volume defined by the diaphragm member when in its natural second dome configuration. This means that the diaphragm member is a snug, or loose fit over the outer surface.

In other embodiments of the invention (not shown) bowls comprise diaphragm members like diaphragm member 62, but with different numbers of pairs of annular cavities in the first and second surfaces thereof, including just one pair, two pairs or four or more.

It will be appreciated that the various features of the nine embodiments described above can be readily combined to create further embodiments. For example, in one further embodiment (not shown) a diaphragm member comprises the cross-sectional shape of diaphragm member 41 shown in Figures 11 and 12, as well as the rib cavities of diaphragm member 51 shown in Figure 13. In another embodiment (not shown) a diaphragm member comprises the cross-sectional shape of the diaphragm member 56 shown in Figures 14 and 15, as well as the central opening of the diaphragm member 24 shown in Figures 7 and 8. It will be appreciated that any such combination of features is possible, and is within the disclosure of this patent application.

Thus, the present invention provides a colander, plant pot or other device with drainage apertures which can be opened and closed in a quick and easy manner by flipping the resilient diaphragm member between its two dome configurations. There is also provided a lid for such a bowl which can seal the interior of the bowl shut in one arrangement, while allowing for a loose fit which can accommodate serving spoons or the like when used the other way up.

## Claims

1. A bowl (1) comprising an open top (2), an outer surface (3) and a base (4), in which a plurality of first drainage apertures (5) are provided in said outer surface, in which said base is provided with a resilient bi-stable diaphragm member (6) which is manually switchable between a first dome configuration in which it extends away from said outer surface, and a second dome configuration in which it is everted in relation to said first configuration,
**characterised in that**:
in said second dome configuration said base overlies said outer surface to close said plurality of first drainage apertures.

2. A bowl (1) as claimed in claim 1 in which said bowl comprises an outer rim (7) which defines said open top (2), and in which a pair of diametrically opposed handles (8) are formed on said outer rim.

3. A bowl (1) as claimed in claim 1 in which said outer surface (3) defines an area which is greater in volume than a volume defined by said diaphragm member (6) when in its natural second dome configuration.

4. A bowl (1) as claimed in claim 1 in which said diaphragm member (6) is annular.

5. A bowl (1) as claimed in claim 1 in which said diaphragm member (6) comprises an outer rim (10), and in which said outer rim comprises at least one concavity (9) formed therein, such that when said diaphragm member is in said first dome configuration a first portion (11) of said outer rim extends through a first plane (12), and a second portion (13) of said outer rim extends through a second plane (14) different to said first plane.

6. A bowl (22) as claimed in claim 1 in which said outer surface (3) comprises a plurality of second drainage apertures (25) positioned further from said base (26) than said plurality of first drainage apertures (23), and in which in said second dome configuration an outer rim (27) of said diaphragm member (24) is disposed between said first drainage apertures and said second drainage apertures, so said second drainage apertures remain open.

7. A bowl (1) as claimed in claim 1 in which said base (4) comprises a mounting aperture (16), in which said diaphragm member (6) comprises a plug section (17) which is a push-fit into said mounting aperture.

8. A bowl (1) as claimed in claim 1 in which said diaphragm (36) member is constructed from a resilient silicone material, and comprises an internal spring steel member (37) comprising a central portion (38) aligned with a centre (39) of said diaphragm member, and plurality of spring arms (40) extending radially away from said central portion.

9. A bowl (1) as claimed in claim 1 in which said diaphragm member (6) is constructed from a resilient silicone material, and comprises a substantially annular hinge (20) formed therein comprising a section of silicone material narrower than the remainder of the diaphragm member.

10. A bowl (1) as claimed in claim 1 in which said diaphragm member (41) comprises an outer rim (44), a polar axis (42) and a radial axis (43) which intersects said outer rim at first and second opposite circumferential points (45 and 46), in which at a cross-section passing through said diaphragm member (41) which is aligned with said radial axis said diaphragm member comprises a first part (47) on one side of said polar axis which has a greater thickness than a second part (48) on the opposite side of said polar axis, and in which the thickness of the diaphragm member decreases linearly in a circumferential direction from said first part to said second part, in both circumferential directions therefrom.

11. A bowl (1) as claimed in claim 1 in which said diaphragm member (41) comprises a polar axis (57) and an outer rim (44), and in which a thickness of said diaphragm member increases in a radial direction from said polar axis to said outer rim.

12. A bowl (61) as claimed in claim 1 in which said diaphragm member (62) comprises a polar axis (71), in which said diaphragm member comprises an annular cavity (63) which is axially aligned with said polar axis.

13. A bowl (61) as claimed in claim 12 in which said diaphragm member (62) comprises a plurality of annular cavities (63, 64, 65, 67, 68, 69) which are axially aligned with said polar axis (71), in which a first set of annular cavities (63, 64, 65) of different circumferences are provided in a first surface (66) of said diaphragm member, and in which a second set of annular cavities (67, 68, 69) which correspond in position and size to said first set of annular cavities are provided in a second surface (70) of said diaphragm member.

14. A bowl (80) as claimed in claim 1, in which said bowl further comprises a lid (81) adapted to close said open top (88), in which said lid comprises a first side (82), a second side (83), a peripheral rim (84) and a resilient flange member (85) which extends from said peripheral rim, in which in a first closed position of said lid, said lid is disposed in said open top with said first side uppermost and with said resilient flange member placed under compression against an interior surface portion (90) of said bowl, thereby forming a seal.

15. A bowl (80) as claimed in claim 14 in which said resilient flange member (85) is formed such that when it is under no compression it extends from said peripheral rim (84) at an angle which is less than 180 degrees to a plane (A-A) of said first side (82), in which said resilient flange member comprises at least one aperture (96) formed therein, which extends from an outer edge (98) thereof to a point spaced from said peripheral rim (84), in which in a second closed position of said lid (81), said lid is disposed in said open top with said second side (83) uppermost, and with said outer edge (98) of said resilient flange member resting against said interior surface portion (90) of said bowl, and with said at least one aperture forming an opening (100) into an interior (94) of said bowl.

## Patentansprüche

1. Schüssel (1), umfassend eine offene Oberseite (2), eine Außenoberfläche (3) und eine Basis (4), wobei eine Vielzahl erster Ablauföffnungen (5) in der Außenoberfläche vorgesehen ist, wobei die Basis mit einem federelastischen, bistabilen Membranelement (6) ausgestattet ist, das zwischen einer ersten gewölbten Konfiguration, in der es sich von der Außenoberfläche weg erstreckt, und einer zweiten gewölbten Konfiguration, in der es im Vergleich zur ersten Konfiguration umgestülpt ist, händisch schaltbar ist,
**dadurch gekennzeichnet, dass**
die Basis in der zweiten gewölbten Konfiguration über der Außenoberfläche liegt, um die Vielzahl erster Ablauföffnungen zu verschließen.

2. Schüssel (1) gemäß Anspruch 1, wobei die Schüssel einen äußeren Rand (7) umfasst, der die offene Oberseite (2) definiert, und wobei ein Paar sich diametral gegenüberliegender Handgriffe (8) an dem äußeren Rand ausgebildet sind.

3. Schüssel (1) gemäß Anspruch 1, wobei die Außenoberfläche (3) einen Bereich definiert, dessen Volumen größer als ein Volumen ist, das von dem Membranelement (6) gebildet wird, wenn es in seiner natürlichen zweiten gewölbten Konfiguration ist.

4. Schüssel (1) gemäß Anspruch 1, wobei das Membranelement (6) ringförmig ist.

5. Schüssel (1) gemäß Anspruch 1, wobei das Membranelement (6) einen äußeren Rand (10) umfasst und wobei der äußere Rand mindestens eine darin ausgebildete Konkavität (9) umfasst, sodass, wenn das Membranelement in der ersten gewölbten Konfiguration ist, ein erster Teil (11) des äußeren Rands sich in einer ersten Ebene (12) erstreckt und ein zweiter Teil (13) des äußeren Rands sich in einer zweiten Ebene (14) erstreckt, die sich von der ersten Ebene unterscheidet.

6. Schüssel (22) gemäß Anspruch 1, wobei die Außenoberfläche (3) eine Vielzahl zweiter Ablauföffnungen (25) umfasst, die von der Basis (26) weiter entfernt als die Vielzahl erster Ablauföffnungen (23) angeordnet ist, und wobei ein äußerer Rand (27) des Membranelements (24) in der zweiten gewölbten Konfiguration zwischen den ersten Ablauföffnungen und den zweiten Ablauföffnungen angeordnet ist, sodass die zweite Ablauföffnungen offen bleiben.

7. Schüssel (1) gemäß Anspruch 1, wobei die Basis (4) eine Befestigungsöffnung (16) umfasst, wobei das Membranelement (6) einen Stopfenabschnitt (17) umfasst, der in einem Eindrücksitz in der Befestigungsöffnung sitzt.

8. Schüssel (1) gemäß Anspruch 1, wobei das Membranelement (36) aus einem federelastischen Silikonmaterial aufgebaut ist und ein inneres Federstahlelement (37), das einen mittleren Teil (38) umfasst, der mit einer Mitte (39) des Membranelements ausgerichtet ist, und eine Vielzahl von Federarmen (40) umfasst, die sich von dem mittleren Teil aus radial weg erstrecken.

9. Schüssel (1) gemäß Anspruch 1, wobei das Membranelement (6) aus einem federelastischen Silikonmaterial aufgebaut ist und ein im Wesentlichen ringförmiges Scharnier (20) umfasst, das darin ausgebildet ist, das einen Abschnitt aus Silikonmaterial umfasst, der dünner als das restliche Membranelement ist.

10. Schüssel (1) gemäß Anspruch 1, wobei das Membranelement (41) einen äußeren Rand (44), eine Polachse (42) und eine radiale Achse (43) umfasst, die den äußeren Rand an einem ersten und einem zweiten gegenüberliegenden Umfangspunkt (45 und 46) schneidet, wobei an einem durch das Membranelement (41) verlaufenden Querschnitt, der mit der radialen Achse ausgerichtet ist, das Membranelement einen ersten Teil (47) auf einer Seite der Polachse umfasst, der eine größere Dicke als ein zweiter Teil (48) auf der gegenüberliegenden Seite der Polachse hat, und wobei sich die Dicke des Membranelements linear in einer Umfangsrichtung von dem ersten Teil zu dem zweiten Teil in beiden Umfangsrichtungen von jenem ausgehend verringert.

11. Schüssel (1) gemäß Anspruch 1, wobei das Membranelement (41) eine Polachse (57) und einen äußeren Rand (44) umfasst und wobei eine Dicke des Membranelements von der Polachse in einer radialen Richtung zu dem äußeren Rand hin zunimmt.

12. Schüssel (61) gemäß Anspruch 1, wobei das Membranelement (62) eine Polachse (71) umfasst, wobei das Membranelement einen ringförmigen Hohlraum (63) umfasst, der mit der Polachse axial ausgerichtet ist.

13. Schüssel (61) gemäß Anspruch 12, wobei das Membranelement (62) eine Vielzahl ringförmiger Hohlräume (63, 64, 65, 67, 68, 69) umfasst, die mit der Polachse (71) axial ausgerichtet sind, wobei eine erste Menge ringförmiger Hohlräume (63, 63, 65) unterschiedlicher Umfänge in einer ersten Oberfläche (66) des Membranelements vorgesehen ist, und wobei eine zweite Menge ringförmiger Hohlräume (76, 68, 69), die in Position und Größe der ersten Menge ringförmiger Hohlräume entsprechen, in einer zweiten Oberfläche (70) des Membranelements vorgesehen ist.

14. Schüssel (80) gemäß Anspruch 1, wobei die Schüssel ferner einen Deckel (81) umfasst, der dazu angepasst ist, die offene Oberseite (88) zu verschließen, wobei der Deckel eine erste Seite (82), eine zweite Seite (83), einen umlaufenden Rand (84) und ein federelastisches Flanschelement (85) umfasst, das sich von dem umlaufenden Rand aus erstreckt, wobei der Deckel in einer ersten geschlossenen Position des Deckels so in der offenen Oberseite angeordnet ist, dass die erste Seite zuoberst ist, und wobei das federelastische Flanschelement unter Druck gegen einen Innenoberflächenteil (90) der Schüssel zu liegen kommt, wodurch es eine Dichtung ausbildet.

15. Schüssel (80) gemäß Anspruch 14, wobei das federelastische Flanschelement (85) so ausgebildet ist, dass es, wenn es nicht unter Druck ist, sich von dem umlaufenden Rand (84) in einem Winkel erstreckt, der kleiner als 180 Grad zu einer Ebene (A-A) der ersten Seite (82) ist, wobei das federelastische Flanschelement mindestens eine darin ausgebildete Öffnung (96) umfasst, die sich von dessen äußerem Rand (98) zu einem Punkt erstreckt, der von dem umlaufenden Rand (84) beabstandet ist, wobei der Deckel in einer zweiten geschlossenen Position des Deckels (81) in der offenen Oberseite mit der zweiten Seite (83) zuoberst angeordnet ist, und wobei der äußere Rand (98) des federelastischen Flanschelements auf der Innenoberfläche (90) der Schüssel ruht, und wobei die mindestens eine Öffnung eine Öffnung (100) in einen Innenraum (94) der Schüssel bildet.

## Revendications

1. Cuve (1) comprenant une partie supérieure ouverte (2), une surface externe (3) et une base (4), dans laquelle une pluralité de premières ouvertures de drainage (5) sont prévues dans ladite surface externe, dans laquelle ladite base est prévue avec un élément de diaphragme bistable résilient (6) qui peut être manuellement commuté entre une première configuration de dôme dans laquelle il s'étend à distance de ladite surface externe, et une seconde configuration de dôme dans laquelle il est inversé par rapport à ladite première configuration,
**caractérisée en ce que** :
dans ladite seconde configuration de dôme, ladite base recouvre ladite surface externe pour fermer ladite pluralité de premières ouvertures de drainage.

2. Cuve (1) selon la revendication 1, dans laquelle ladite cuve comprend un rebord externe (7) qui définit ladite partie supérieure ouverte (2) et dans laquelle une paire de poignées diamétralement opposées (8) est formée sur ledit rebord externe.

3. Cuve (1) selon la revendication 1, dans laquelle ladite surface externe (3) définit une zone qui est supérieure en volume à un volume définit par ledit élément de diaphragme (6) lorsqu'elle est dans sa seconde configuration de dôme naturelle.

4. Cuve (1) selon la revendication 1, dans laquelle ledit élément de diaphragme (6) est annulaire.

5. Cuve (1) selon la revendication 1, dans laquelle ledit élément de diaphragme (6) comprend un rebord externe (10), et dans laquelle ledit rebord externe comprend au moins une concavité (9) formée à l'intérieur de ce dernier, de sorte que lorsque ledit élément de diaphragme est dans ladite première configuration de dôme, une première partie (11) dudit rebord externe s'étend à travers un premier plan (12), et une seconde partie (13) dudit rebord externe s'étend à travers un second plan (14) différent dudit premier plan.

6. Cuve (22) selon la revendication 1, dans laquelle ladite surface externe (3) comprend une pluralité de secondes ouvertures de drainage (25) positionnées plus loin de ladite base (26) que ladite pluralité de premières ouvertures de drainage (23), et dans laquelle dans ladite seconde configuration de dôme, un rebord externe (27) dudit élément de diaphragme (24) est disposé entre lesdites premières ouvertures de drainage et lesdites secondes ouvertures de drainage, donc lesdites secondes ouvertures de drainage restent ouvertes.

7. Cuve (1) selon la revendication 1, dans laquelle ladite base (4) comprend une ouverture de montage (16) dans laquelle ledit élément de diaphragme (6) comprend une section de bouchon (17) qui est emboîtable dans ladite ouverture de montage.

8. Cuve (1) selon la revendication 1, dans laquelle ledit élément de diaphragme (36) est construit à partir d'un matériau en silicone résilient, et comprend un élément en acier à ressort interne (37) comprenant une partie centrale (38) alignée avec un centre (39) dudit élément de diaphragme, et la pluralité de bras de ressort (40) s'étendant radialement à distance de ladite partie centrale.

9. Cuve (1) selon la revendication 1, dans laquelle ledit élément de diaphragme (6) est fabriqué à partir d'un matériau en silicone résilient, et comprend une charnière (20) sensiblement annulaire formée à l'intérieur de ce dernier, comprenant une section de matériau en silicone plus étroite que le reste de l'élément de diaphragme.

10. Cuve (1) selon la revendication 1, dans laquelle ledit élément de diaphragme (41) comprend un rebord externe (44), un axe polaire (42) et un axe radial (43) qui coupe ledit rebord externe au niveau des premier et second points circonférentiels (45 et 46) opposés, dans laquelle au niveau d'une section transversale passant par ledit élément de diaphragme (41) qui est aligné avec ledit axe radial, ledit élément de diaphragme comprend une première partie (47) d'un côté dudit axe polaire qui a une épaisseur plus importante qu'une seconde partie (48) du côté opposé dudit axe polaire et dans laquelle l'épaisseur de l'élément de diaphragme se réduit de manière linéaire dans une direction circonférentielle à partir de ladite première partie jusqu'à ladite seconde partie, dans les deux directions circonférentielles à partir de ce dernier.

11. Cuve (1) selon la revendication 1, dans laquelle ledit élément de diaphragme (41) comprend un axe polaire (57) et un rebord externe (44) et dans laquelle une épaisseur dudit élément de diaphragme augmente dans une direction radiale à partir dudit axe polaire jusqu'au rebord externe.

12. Cuve (61) selon la revendication 1, dans laquelle ledit élément de diaphragme (62) comprend un axe polaire (71), dans laquelle ledit élément de diaphragme comprend une cavité annulaire (63) qui est alignée de manière axiale avec ledit axe polaire.

13. Cuve (61) selon la revendication 12, dans laquelle ledit élément de diaphragme (62) comprend une pluralité de cavités annulaires (63, 64, 65, 67, 68, 69) qui sont axialement alignées avec ledit axe polaire (71), dans laquelle un premier ensemble de cavités annulaires (63, 64, 65) de différentes circonférences est prévu dans une première surface (66) dudit élément de diaphragme, et dans laquelle un second ensemble de cavités annulaires (67, 68, 69) qui correspond du point de vue de la position et de la taille audit premier ensemble de cavités annulaire est prévu dans une seconde surface (70) dudit élément de diaphragme.

14. Cuve (80) selon la revendication 1, dans laquelle ladite cuve comprend en outre un couvercle (81) adapté pour fermer ladite partie supérieure ouverte (88), dans laquelle ledit couvercle comprend un premier côté (82), un second côté (83), un rebord périphérique (84) et un élément de bride résilient (85) qui s'étend à partir dudit rebord périphérique, dans lequel dans une première position fermée dudit couvercle, ledit couvercle est disposé dans ladite partie supérieure ouverte avec ledit premier côté le plus haut et avec ledit élément de bride résilient placé sous compression contre une partie de surface intérieure (90) de ladite cuve, formant ainsi un joint d'étanchéité.

15. Cuve (80) selon la revendication 14, dans laquelle ledit élément de bride résilient (85) est formé de sorte que lorsqu'il n'est pas sous compression, il s'étend à partir dudit rebord périphérique (84) à un angle qui est inférieur à 180 degrés par rapport à un plan (A-A) dudit premier côté (82), dans laquelle ledit élément de bride résilient comprend au moins une ouverture (96) formée à l'intérieur de ce dernier, qui s'étend à partir de son bord externe (98) jusqu'à un point espacé dudit rebord périphérique (84), dans laquelle, dans une seconde position fermée dudit couvercle (81), ledit couvercle est disposé dans ladite partie supérieure ouverte avec ledit second côté (83) le plus haut, et avec ledit bord externe (98) dudit élément de bride résilient qui s'appuie contre ladite partie de surface intérieure (90) de ladite cuve, et avec ladite au moins une ouverture qui forme une ouverture (100) dans un intérieur (94) de ladite cuve.
